# EUROPÄISCHE PATENTANMELDUNG

(11) **EP 1 666 765 A1**
(43) Veröffentlichungstag der Anmeldung: **07.06.2006**
(21) Anmeldenummer: 04028709.6
(22) Anmeldetag: 03.12.2004
(51) Int. Cl.: F16H 1/32

(54) **Getriebe**

(71) Anmelder: Spinea s.r.o., 08005 Presov (SK)
(72) Erfinder: Janek, Bartolomej, 08001 Presov (SK)
(74) Vertreter: Jeck, Anton

(57) **Zusammenfassung**

Die Erfindung betrifft ein Getriebe mit mindestens einem Rad (40) mit Innenverzahnung, mit mindestens einem in Bezug auf das Rad drehbar gelagerten Ausgangskörper (50,50') sowie einer Eingangswelle (10) mit mindestens einem exzentrischen Abschnitt (17,17') mit einer Exzentrizität (e), auf dem ein mit der Innenverzahnung kämmendes Rad (30) mit Außenverzahnung (33) drehbar gelagert ist, wobei bei zwei Ausgangskörpern mindestens ein Rad zwischen den Ausgangskörpern angeordnet ist, sowie einer zwischen dem Rad und dem Ausgangskörper angeordneten Einrichtung, welche die Planetenbewegung des Rades in eine Rotationsbewegung des Ausgangskörpers transformiert, bei dem die Einrichtung mindestens einen zylindrischen, sich in Achsrichtung des Rades erstreckenden Körper (34) aufweist, der in einem Organ (70) drehbar gelagert ist, der Körper mit dem Rad bzw. dem Ausgangskörper betriebsgemäß verbunden ist, das Organ in einer Öffnung (54) des Ausgangskörpers bzw. des Rades drehbar gelagert ist und die Achse des Körpers von der Achse der Öffnung um einen der Exzentrizität (e) entsprechenden Abstand beabstandet ist.

## Beschreibung

Die Erfindung betrifft ein Getriebe gemäß dem Oberbegriff des Anspruchs 1.

Aus der US 4,348,918 ist ein zweistufiges Getriebe bekannt. Die erste Stufe besteht aus einem ersten und einem zweiten Rad mit ineinander greifender Außenverzahnung, wobei das zweite Rad mit einer Kurbelwelle unverdrehbar verbunden ist. Die zweite Stufe besteht aus einem Trägerkörper mit Innenverzahnung, welche mit der Außenverzahnung der Räder der ersten Stufe kämmt. Die Räder mit Außenverzahnung sind mit Öffnungen versehen, in denen sie auf den Kurbelteilen der Kurbelwelle drehbar gelagert sind. Der Trägerkörper ist auf miteinander fest verbundenen Ausgangskörpern drehbar gelagert, welche mit Öffnungen versehen sind, in denen die Enden der Kurbelwelle drehbar gelagert sind. Die Kurbelwelle stellt im Hinblick auf die Funktion eine die Antriebsleistung übertragende Komponente dar.

Ein Nachteil des bekannten Getriebes besteht darin, dass die Kurbelwelle auf vier Lagern in Öffnungen von vier verschiedenen Komponenten drehbar gelagert ist. Eine solche mehrfache Lagerung der Kurbelwelle ist unbestimmt, das heißt, dass die Herstellungstoleranzen der Öffnungen, in denen die Kurbelwelle gelagert ist voneinander abhängig sind und genügend klein gehalten werden müssen, was die Getriebeherstellung sehr kompliziert macht. Infolge möglicher unterschiedlicher Herstellungstoleranzen kann es zu einer unerwünschten Erhöhung des Laufgeräuschs, zu Vibrationen und zu einer vorzeitigen Schädigung des Getriebes kommen.

Zur Sicherung einer ausreichenden Leistungskapazität ist das Getriebe in der Regel mit mehr als einer Kurbelwelle ausgerüstet. Wegen der hohen Anforderungen bezüglich der Herstellungstoleranzen und der Anzahl der Kurbelwellen in dem Getriebe ist die Herstellung äußerst kostspielig. Ähnlich ist wegen der erforderlichen gegenseitigen Abstimmung der Herstellungstoleranzen der einzelnen Teile auch die Montage der Einrichtung kompliziert. Die komplizierte Form der Kurbelwelle macht die Verwendung einer aus der Massenproduktion von Lagern bekannten leistungsstarken Technologie nicht möglich, eine gleichzeitige Bearbeitung mehrerer Kurbelwellen ist ebenfalls nicht möglich.

Die Oberfläche der exzentrisch zueinander angeordneten Teile der Kurbelwelle ist in Bezug auf Ermüdung die meistbeanspruchte Fläche des gesamten Getriebes. Eine Inaugenscheinnahme oder Inspektion der Oberflächen der exzentrisch zueinander angeordneten Teile der Kurbelwelle setzt eine Demontage des gesamten Getriebes voraus. Das macht den Betrieb und die Wartung derartiger Getriebe kompliziert und kostspielig. Im Falle eines Schadens muss meist die Kurbelwelle ersetzt werden, die in Bezug auf die Herstellungskosten besonders ins Gewicht fällt.

Die drehbare Lagerung des Trägerkörpers auf dem Ausgangskörperpaar ist innen vorgesehen, was den Innenraum des Getriebes in radialer Richtung einschränkt. Folglich können die im Inneren des Getriebes angeordneten Komponenten nur klein und nicht genügend robust dimensioniert werden, was wiederum die Leistungsdaten des Getriebes, z.B. das maximale Drehmoment, die maximale Leistung, die Torsionssteifigkeit usw. begrenzt.

Ausgehend vom obigen Stand der Technik liegt der Erfindung die Aufgabe zugrunde, hier Abhilfe zu schaffen.

Die Aufgabe wird erfindungsgemäß durch die Merkmale des Anspruchs 1 gelöst.

Wesentlich ist bei dem erfindungsgemäßen Getriebe, dass sich zwischen dem Rad mit Außenverzahnung und dem Ausgangskörper eine Einrichtung befindet, die die Planetenbewegung der Räder mit Außenverzahnung in eine Rotationsbewegung des Ausgangskörpers umsetzt. Das erfindungsgemäße Getriebe zeichnet sich dadurch aus, dass die Einrichtung mindestens aus einem zylinderförmigen Körper gebildet ist, der in Richtung Achse des Rads mit Innenverzahnung orientiert ist, wobei der zylinderförmige Körper funktionsgemäß mit dem Rad mit Außenverzahnung bzw. mit dem Ausgangsköper verbunden ist. Der zylinderförmige Körper ist in der Regel als Zapfen mit kreisrundem Querschnitt ausgebildet und mit dem Rad mit Außenverzahnung verbunden.

Das Rad mit Außenverzahnung ist hierbei auf dem Excenter drehbar gelagert. Es weist hierzu eine zentrale Öffnung auf, in die der Excenter hinein geschoben werden kann.

Das auf dem rotierenden Excenter angeordnete, außenverzahnte Rad läuft in dem Innenzahnkranz des innenverzahnten Rads um und führt dabei eine überlagerte Dreh- und Excenterbewegung aus.

Der Kern der Erfindung ist dabei, dass diese überlagerte Bewegung mittels des Organs, das Teil der Transformationseinrichtung ist, direkt in eine Drehbewegung des Ausgangskörpers und damit der Ausgangswelle umgesetzt werden kann.

Ein Vorteil des erfindungsgemäßen Getriebes besteht darin, dass die die Planetenbewegung des Rads transformierende Einrichtung aus Komponenten unkomplizierter Form hergestellt werden kann, die mittels hochproduktiven, bei der Lagerfertigung verwendeten Technologien hergestellt werden können, wodurch eine wesentliche Senkung der Herstellungskosten gegenüber dem Stand der Technik erreicht werden kann.

So ist der zylinderförmige Körper vorzugsweise durch einen im Querschnitt kreisförmigen Zapfen gebildet, der aus einem Stangenhalbzeug hergestellt werden kann und auf hochproduktiven spitzenlosen Rundschleifmaschinen geschliffen werden kann. Ebenso besteht das Organ vorzugsweise aus einem Excenterring, dessen Innenflächenachse entgegen der Außenflächenachse um einen Abstand, der der Exzentrizität entspricht, versetzt ist. Seine Außenfläche kann durch hochproduktives spitzenloses Schleifen und die Stirnflächen durch hochproduktives, beim Schleifen der Lagerringstirnflächen verwendetes Schleifen bearbeitet werden.

Beim Drehen und Schleifen der Excenterring-Innenfläche kann ein mehrfacher Fertigungsprozess angewendet werden, bei dem mehrere Excenterringe gleichzeitig gedreht und geschliffen werden. Ein Vorteil des gleichzeitigen Schleifens von Innenflächen mehrerer Excenterringe besteht darin, dass jeder Ring mit der gleichen Exzentrizität bearbeitet wird, was die Voraussetzung für einen gleichmäßigen und ruhigen Getriebelauf ist.

Eine besondere Eigenschaft des erfindungsgemäßen Getriebes ist, dass im Fall einer Beschädigung oder einer erforderlichen Inaugenscheinnahme der die Planetenbewegung des Rads transformierenden Einrichtung diese ohne Notwendigkeit einer Demontage des gesamten Getriebes ausgebaut werden kann.

Ein zusätzlicher Vorteil des erfindungsgemäßen Getriebes besteht darin, dass die Leistung über zwei voneinander unabhängige Übertragungswege übertragen werden kann, von denen jeder aus einem Rad mit Außenverzahnung, einer Transformationseinrichtung und einem Ausgangskörper besteht. Das macht einen Betrieb des Getriebes auch ohne eine gegenseitige, feste Verbindung der Ausgangskörper möglich. Außerdem entfallen Schwierigkeiten, die aus der gegenseitigen Beeinflussung der Toleranzen der Lagerung der Transformationseinrichtung folgen und die bereits im Stand der Technik diskutiert worden sind.

Dabei ist zwischen den wahlweise miteinander verbundenen Ausgangskörpern mindestens ein Rad mit Außenverzahnung gelagert. Eine Verbindung der Ausgangskörper kann beispielsweise mittels mindestens eines Querelements verwirklicht werden, das mit einem Spiel durch eine axiale Öffnung des Rads mit Außenverzahnung so geführt wird, dass die beiden Ausgangskörper ein gegenseitig unverdrehbares Paar bilden. Das Querelement bildet entweder einen integralen Bestandteil mindestens eines Ausgangskörpers, oder ist als eine selbständige, mindestens mit einem Ausgangskörper fest verbundene Komponente ausgeführt. An der Stirnseite des Querelements kann eine Gewindebohrung und eine Bohrung für eine Schraube und einen Stift vorgesehen sein, mit deren Hilfe die Ausgangskörper fest verbunden sind.

Die wahlweise fest miteinander verbundenen Ausgangskörper sind dabei vorzugsweise in oder an dem Rad mit Innenverzahnung drehbar gelagert. Das Rad mit Innenverzahnung kämmt mit dem Rad mit Außenverzahnung. Die Innenverzahnung kann durch im Querschnitt kreisförmige Zapfen gebildet sein, die in Nuten mit einem halbkreisförmigem Querschnitt eingelegt sind. Die Achse des Rades mit Außenverzahnung ist gegenüber der Achse des Rades mit Innenverzahnung um einen der Exzentrizität entsprechenden Abstand versetzt.
Eine vorteilhafte Ausgestaltung der Erfindung sieht vor, dass die Teile der Einrichtung formschlüssig miteinander verbindbar sind.

Eine vorteilhafte Ausgestaltung der Erfindung sieht vor, dass der zapfenförmige und mit Abstand zur Längsachse der Eingangswelle angeordnete Körper in die Öffnung am Ausgangskörper oder am Rad hineinragt.

Eine vorteilhafte Ausgestaltung der Erfindung sieht vor, dass das Organ hohlzylinderförmig ausgebildet ist.

Eine vorteilhafte Ausgestaltung der Erfindung sieht vor, dass das Organ die Form einer Hülse aufweist, die den Raum zwischen dem Körper und der Öffnung spielfrei ausfüllt.

Eine andere vorteilhafte Ausgestaltung der Erfindung sieht vor, dass die Außen- und Innenumhüllung des Organs zylindrisch ist, wobei die Achse der Öffnung mit der Achse der Außenfläche des Organs zusammenfällt und der Abstand der Achse der Außenfläche des Organs von der Achse der zylindrischen Innenumhüllung der Exzentrizität entspricht.

Das Organ weist dabei vorzugsweise die Form eines Rings mit einer Innen- und einer Außenfläche auf, wobei die Achse seiner Innenfläche entgegen der Achse seiner Außenfläche um einen Abstand, der der Exzentrizität entspricht, versetzt ist. Eine derartige Form wird auch als Excenterring bezeichnet. Das Organ kann so den exzentrischen Bewegungsanteil der kombinierten Dreh- und Excenterbewegung des Rades mit Außenverzahnung, den auch der in dem Organ gelagerte und fest mit dem Rad mit Außenverzahnung verbundene zylindrische Körper ausführt, ausgleichen. Das Organ ist dabei sowohl gegenüber dem zylinderförmigen Körper, als auch gegenüber der Öffnung drehbar gelagert. Die drehbare Lagerung des Organs in der außermittigen Öffnung des Ausgangskörpers ist entweder eine Wälz- oder eine Gleitlagerung, die drehbare Lagerung des zylinderförmigen Körpers im Organ ist ebenfalls eine Wälz- oder eine Gleitlagerung.

Eine andere vorteilhafte Ausgestaltung der Erfindung sieht vor, dass mehrere, vorzugsweise zwei, drei, vier, fünf oder sechs Körper vorgesehen sind, die um die Längsachse der Eingangswelle verteilt sind und mit einer entsprechenden Anzahl von Organen in betrieblicher Verbindung stehen. Durch die Verwendung mehrerer Körper und Organe zur Transformation der kombinierten Dreh- und Excenterbewegung des außenverzahnten Rades in eine Drehbewegung des Ausgangskörpers können die Belastungen der einzelnen Teile des Getriebes, insbesondere m Hinblick auf Lochleibung und Lagerbelastung verringert werden.

Eine andere vorteilhafte Ausgestaltung der Erfindung sieht vor, dass die axiale Länge der Körper sowie die axiale Länge der Organe so gewählt ist, dass sie in etwa der Dicke des Ausgangskörpers entspricht.

Eine zusätzliche vorteilhafte Ausgestaltung der Erfindung sieht vor, dass die Verbindung zwischen den Körpern und den zugeordneten Organen durch Steckverbindungen in axialer Richtung herstellbar ist.

Eine zusätzliche vorteilhafte Ausgestaltung der Erfindung sieht vor, dass mindestens zwischen den planparallelen Stirnseiten des Ausgangskörpers und des Rades mindestens ein Axialwälzlager angeordnet ist, über das der Ausgangskörper und das Rad gegenseitig abgestützt sind. Darüber hinaus lässt sich so eine besonders kompakte und robuste Ausführung des Getriebes erzielen.

Eine zusätzliche vorteilhafte Ausgestaltung der Erfindung sieht vor, dass das Organ die Form einer excenterringförmigen Hülse aufweist und in dem Raum zwischen dem Körper und der Öffnung angeordnet ist, wobei zwischen dem Körper und dem Organ und/oder zwischen dem Organ und der Öffnung jeweils ein Wälzlager angeordnet ist.

Eine andere, besonders vorteilhafte Ausgestaltung der Erfindung sieht vor, dass der exzentrische Abschnitt der Eingangswelle mindestens aus einem um die Exzentrizität gegenüber der Längsachse der Eingangswelle parallel versetzten zylinderförmigen Kurbelzapfen besteht, dessen Durchmesser mindestens dem Durchmesser der Antriebswelle zuzüglich dem doppelten Wert der Exzentrizität entspricht. Der Kurbelzapfen bildet dabei die Laufbahn für zwischen dem Kurbelzapfen und dem Rad mit Außenverzahnung angeordnete Wälzkörper. Durch die Ausführung des Kurbelzapfens mit einem mindestens dem Durchmesser der Eingangswelle zuzüglich der doppelten Exzentrizität entsprechenden Durchmesser kann die Eingangswelle und der Kurbelzapfen aus einem Stück hergestellt werden. Bei der Montage und Demontage kann die Antriebswelle an einem Stück in das Getriebe hinein- und aus dem Getriebe herausgezogen werden. Sind zwei oder mehr Kurbelzapfen vorgesehen, so sind diese gleichmäßig über den Umfang der Eingangswelle versetzt zueinander angeordnet.

Das Wesen des erfindungsgemäßen Getriebes besteht dabei darin, dass die Eingangswelle mindestens mit einem exzentrischen Teil, vorzugsweise einem Kurbelzapfen versehen ist. Im Falle zweier exzentrischer Teile sind diese gegenseitig um 180° oder annähernd 180° gegeneinander verdreht. Die Kurbelzapfenachse ist entgegen der Eingangswellenachse um einen Abstand, der der Exzentrizität des Kurbelzapfens entspricht versetzt.

Wesentlich ist dabei, dass anstelle der aufwändigen Herstellung einer Kurbelwelle, bei der die zueinander versetzten Kurbelabschnitte durch Schmieden hergestellt und miteinander verbunden werden, der Kurbelzapfen zusammen mit der Eingangswelle als ein Drehteil relativ einfach hergestellt werden kann. Die Eingangswelle und der Kurbelzapfen weisen eine gemeinsame Mantelfläche auf, wobei die Eingangswelle den Kurbelzapfen exzentrisch durchdringt. Demgegenüber weisen bei einer Kurbelwelle die Eingangswelle und der Kurbelabschnitt keine gemeinsame Mantelfläche auf und die Eingangswelle verläuft mindestens teilweise außerhalb des Kurbelabschnitts.

Eine zusätzliche, besonders vorteilhafte Ausgestaltung der Erfindung sieht vor, dass die Eingangswelle mindestens einen Abschnitt mit einer Außenverzahnung aufweist, welche ein mit dem Organ verbundenes Zahnrad kämmt, wobei die Achse des Zahnrads der Achse der Öffnung, in welcher das Organ angeordnet ist, entspricht. Durch das die Außenverzahnung der Eingangswelle kämmende, mit dem Organ verbundenen Zahnrad wird das Organ synchron zur Umdrehung der Eingangswelle gedreht. Dadurch wird der exzentrische Versatz zwischen dem zylinderförmigen Außenmantel und dem zylinderförmigen Innenmantel des hülsenförmigen Organs synchron zu der exzentrischen Bewegung des exzentrischen Abschnitts der Eingangswelle gedreht. Hierdurch entsteht ein zusätzlicher Freiheitsgrad zur Beeinflussung des Übersetzungsverhältnisses des Getriebes.

Eine solche Ausgestaltung des erfindungsgemäßen Getriebes weist sämtliche Vorteile eines Getriebes mit zentraler Kurbelwelle auf. Außerdem kann das gesamte Übersetzungsverhältnis mit Hilfe des Übersetzungsverhältnisses der gegenseitig im Eingriff stehenden Zahnräder und der Räder mit Außenverzahnung geändert werden.

Eine besonders vorteilhafte Ausgestaltung der Erfindung sieht vor, dass der Ausgangskörper stirnseitig an dem Rad mit Innenverzahnung drehbar gelagert ist.

Das Rad mit Innenverzahnung weist dabei an den an die Ausgangskörper anliegenden Seiten zylinderförmige radiale Innenflächen und gleichzeitig mindestens an einer Stirn-Außenseite eine axiale Kreisringfläche auf, die normal zur Achse des Rades mit Innenverzahnung ausgerichtet ist. Der Querabstand der axialen Kreisringflächen am Rad mit Innenverzahnung bestimmt dessen Dicke.

Ein Vorteil der Anordnung der axialen Kreisringflächen des Rads mit Innenverzahnung an dessen Außen-Stirnseite ist, dass diese Anordnung dessen Innenraum in radialer Richtung bei unveränderten Außenabmessungen vergrößert. Der größere Innenraum macht eine robustere Konstruktion der Getriebekomponenten möglich, wodurch die Funktionsparameter des Getriebes, wie z.B. die Momentkapazität, Leistungsdichte, Torsionssteifigkeit u.a. höhere Werte entgegen dem technischen Stand erreichen.

Im Raum zwischen den einander zugewandten Axialflächen des Ausgangskörpers und des Rades mit Innenverzahnung befinden sich dabei vorzugsweise zylinderförmige Wälzelemente, deren Achsen quer zur Achse des Rades mit Innenverzahnung ausgerichtet sind. Die Axialfläche des Ausgangskörpers und die Axialfläche des Rads mit Innenverzahnung können entsprechend gewölbt sein, um Kantenspannungen an den Enden der Wälzelemente, die sich zwischen diesen Flächen befinden, zu beseitigen. Ebenso ist denkbar, Kugeln zu verwenden. An den gegeneinander anliegenden Axialflächen des Ausgangskörpers und dem Rad mit Innenverzahnung können Lagerlaufbahnen zur Lagerung der kugelförmigen bzw. tonnenförmigen Wälzelemente ausgebildet sein.

Die Wälzelemente zwischen den anliegenden Axialflächen des Ausgangskörpers und des Rades mit Innenverzahnung sind dabei vorzugsweise in hierfür vorgesehenen Aussparungen des Lagerkäfigs gelagert. Der Lagerkäfig weist dabei mindestens eine Stirnfläche und eine Innenfläche auf, mit der er auf der Radialfläche des Ausgangskörpers aufliegt. Der Lagerkäfig ist dabei auf der Radialfläche des Ausgangskörpers drehbar gelagert. Die Aussparungen des Lagerkäfigs sind derart ausgebildet, dass ein radiales Herausfallen der Wälzelemente aus dem Lagerkäfig verhindert wird.

Der Durchmesser des Teilkreises der an den Außen-Axialflächen angebrachten Wälzelemente ist dabei im Vergleich zur Anordnung der Wälzelemente an der inneren Axialfläche ebenfalls größer. Folglich steigt bei gleichen Außenabmessungen des Getriebes der Wert der Kippsteifigkeit und der Momentkapazität entgegen dem bisherigen Stand der Technik wesentlich an.

Ferner gehört zum Vorteil der Drehlagerung der Ausgangskörper gemäß der Erfindung, dass der Unterschied der Umfangsgeschwindigkeit des Käfigs mit den Wälzelementen auf den Wälzflächen des Ausgangskörpers minimal ist, was aus der Sicht der Reibung und des Abriebs des Lagerkäfigs von Vorteil ist.

Die Anordnung der Wälzlaufbahnen an den Stirnseiten des Rads mit Innenverzahnung weist einige bedeutende Vorteile auf:
1. Das Schleifen der an den Stirnseiten des Rads mit Innenverzahnung angeordneten Laufbahnen kann auf hochproduktiven, bei der Lagerherstellung verwendeten Schleifmaschinen vorgenommen werden, was die Herstellungskosten stark verringert.
2. Die an den Stirnseiten des Rads mit Innenverzahnung angeordneten Laufbahnen dienen gleichfalls als Spannflächen für das Schleifen der Innenverzahnung, somit entfällt die Notwendigkeit einer zusätzlichen technischen Spannfläche, was ebenfalls die Herstellungskosten verringert.
3. Vereinfacht wird auch die Messung des Abstands der an den Stirnseiten des Rads mit Innenverzahnung angebrachten Laufbahnen zwecks Einstellung einer günstigen Axialvorspannung der Wälzlagerung der Ausgangskörper.

Zwischen der Radialfläche des Ausgangskörpers und der Radialfläche des Rads mit Innenverzahnung können ebenso Wälzelemente zylindrischer Form, deren Achsen zu der Achse des Rades mit Innenverzahnung parallel verlaufen, angeordnet werden. Vorzugsweise ist auch hier eine Führung der Wälzelemente durch einen Lagerkäfig vorgesehen.

Die Radialfläche des Ausgangskörpers und die Radialflächen des Rads mit Innenverzahnung können zwecks Beseitigung der Kantenspannung an den Enden der Wälzelemente, die sich zwischen diesen Flächen befinden, entsprechend gewölbt sein.

Auch hier ist die Verwendung von Kugeln denkbar.

Eine besonders vorteilhafte Ausgestaltung der Erfindung sieht vor, dass mindestens an den einander zugewandten Axialflächen des Ausgangskörpers und des Rads mit Innenverzahnung Lagerlaufbahnen für ein Wälzlager oder ein Kugellager vorgesehen sind.

Die folgende Beschreibung der Zeichnungen erläutert eine der möglichen Ausführungen des erfindungsgemäßen Getriebes. Es zeigen:
- Fig. 1: einen durch einen zylinderförmigen Körper und ein an einem der Ausgangskörper angeordnetes Querelement geführten Schnitt B-B durch ein erfindungsgemäßes Getriebe,
- Fig. 2: eine perspektivische Explosionsdarstellung der einzelnen Getriebekomponenten in deren gegenseitigen Funktionslagen,
- Fig. 3: einen in der Ebene der Stirnfläche eines Rades mit Außenverzahnung liegenden Schnitt C-C durch das Getriebe,
- Fig. 4: einen durch die Kreisring-Stirnfläche des Ausgangskörpers geführten Schnitt D-D durch das Getriebe,
- Fig. 5: eine detaillierte Ansicht der Anordnung der Transformationseinrichtung des Getriebes, die die Planetenbewegung des Rads mit Außenverzahnung in eine Rotationsbewegung des Ausgangselements umsetzt,
- Fig. 6: einen die Lage der Kurbelzapfenachsen im Verhältnis zur Eingangswellenachse zeigenden Schnitt der Eingangswelle durch ihre Symmetrieebene,
- Fig. 7: die Anordnung der Wälzelemente im Lagerkäfig zur Lagerung der Ausgangsglieder,
- Fig. 8: eine Teilansicht der axialen Führung des Rades mit Außenverzahnung,
- Fig. 9: ein Beispiel der Verbindung des Antriebsmotors mit dem Getriebe,
- Fig. 10: ein Querelement als ein mit dem Eingangskörper nicht integriertes Element,

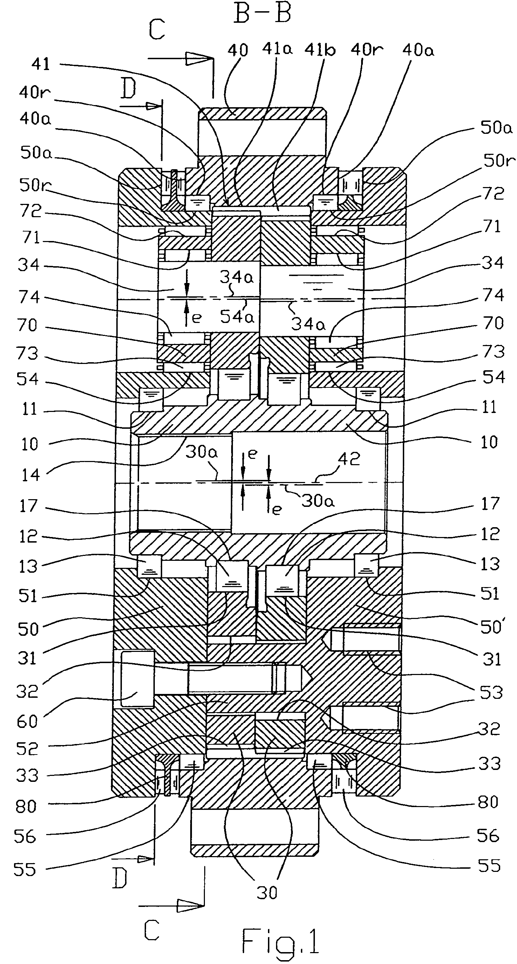

- Fig. 1 a: einen Schnitt durch ein um eine zweite Stufe erweitertes erfindungsgemäßes Getriebe,

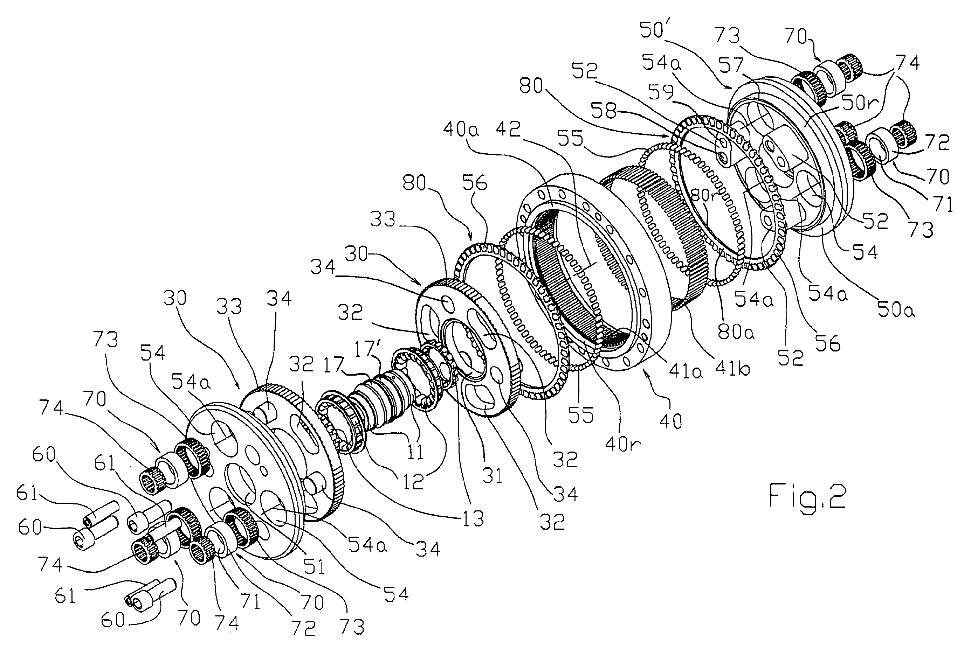

- Fig. 2a: eine perspektivische Explosionsdarstellung des um eine zweite Stufe erweiterten Getriebes, und
- Fig. 2b.: eine perspektivische Detailansicht der Transformationseinrichtung des um eine zweite Stufe erweiterten Getriebes.

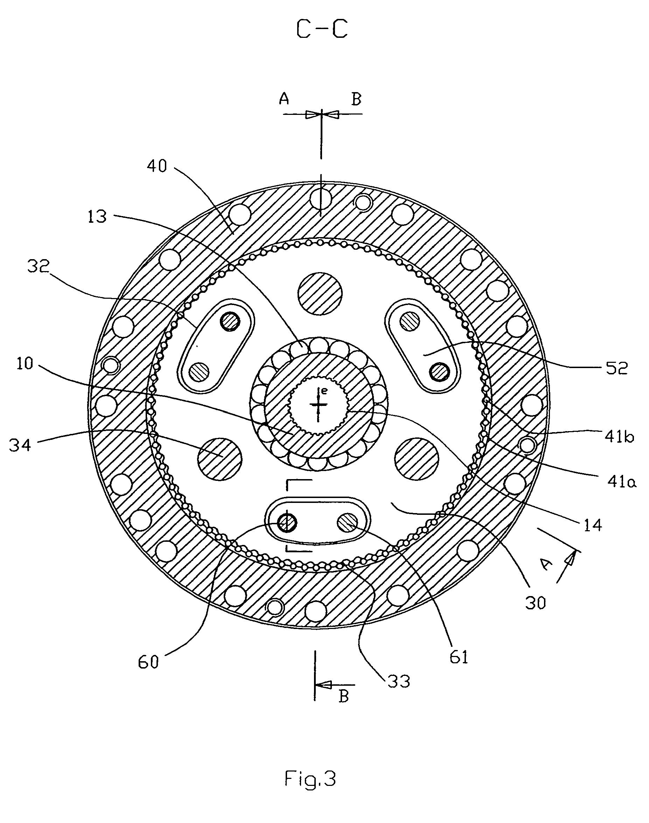

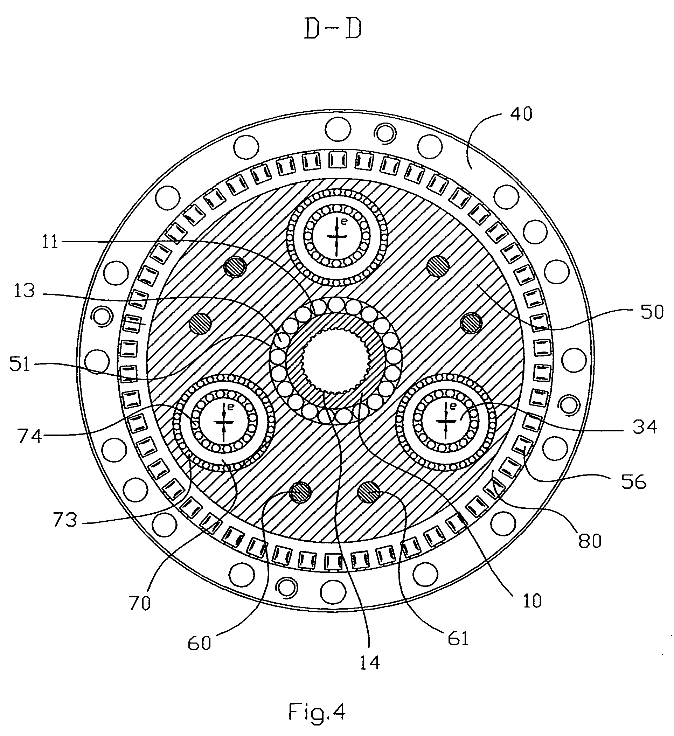

Eine erste vorteilhafte Ausgestaltung des erfindungsgemäßen Getriebes ist in den Figuren 1 und 2 und in den ergänzenden Figuren 3 bis 10 veranschaulicht.

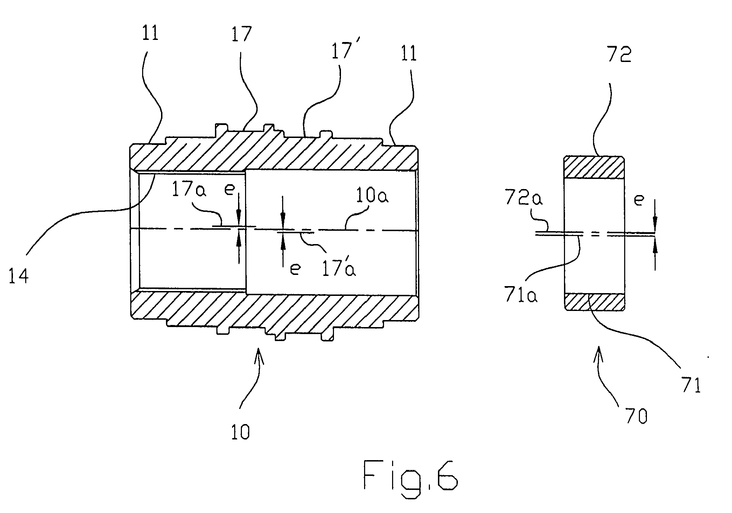

Die Eintrittswelle 10 ist mit einem Kurbelzapfenpaar 17, 17' - den Excentern - versehen, die um die Achse 10a der Eingangswelle um 180° gegeneinander versetzt sind. Die Achsen 17a, 17'a der Kurbelzapfen 17, 17' sind entgegen der Achse 10a der Eingangswelle um einen Abstand e - die Exzentrizität - versetzt. Die Eingangswelle 10 ist an der Innenöffnung mit einer Innennutung 14 für den Anschluss des Antriebsmotors versehen (Fig. 1 und 6).

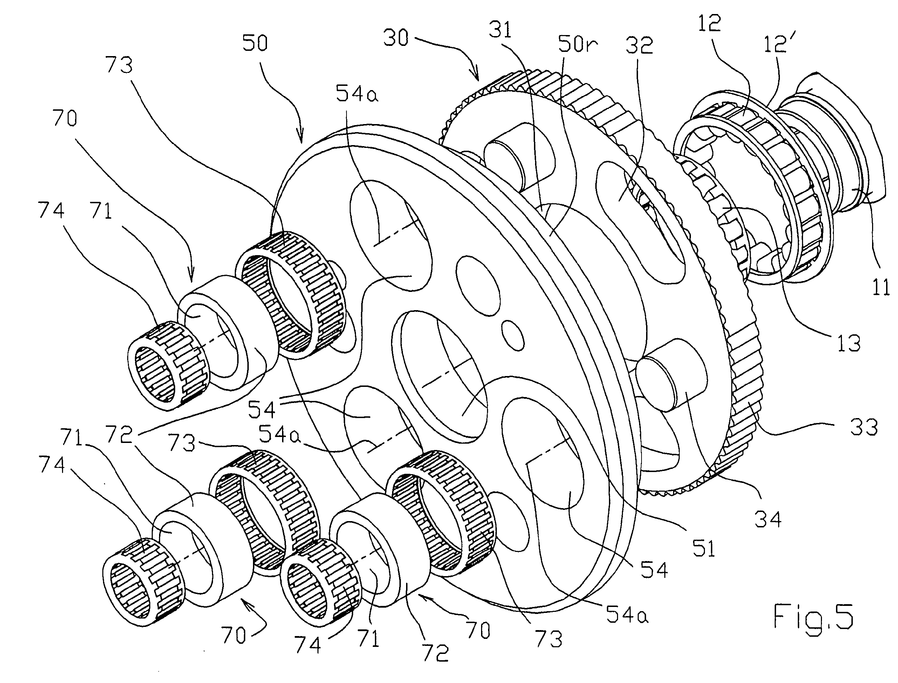

Auf den Excentern 17, 17', deren Umfang Laufbahnen für die Wälzkörper 12 bildet, sind durch die Zentralöffnungen 31 Räder 30 mit Außenverzahnung 33 drehbar gelagert. Die Wälzkörper sind in dem Lagerkäfig 12' gelagert. Die Räder 30 mit Außenverzahnung 33 greifen in die Innenverzahnung 41 des Rads 40 ein (Fig. 1 und 5).

Die Zahnanzahl der Außenverzahnung 33 des Rads 30 ist geringer als die der Innenverzahnung 41 des Rads 40. Die Achse 30a der Räder 30 ist entgegen der Achse 42 des Rads 40 um den Abstand e versetzt (Fig. 1). Die Innenverzahnung 41 besteht aus Nuten 41 a mit Halbkreisprofil, in denen Zylinderzapfen 41 b gelagert sind (Fig. 2 und 3).

Die Räder 30 mit Außenverzahnung sind am Außenumfang im gleichen Abstand voneinander mit außermittigen durchgehenden Axialöffnungen 32 versehen (Fig. 1, 2, 3). Die Räder 30 sind zwischen den Ausgangskörpern 50, 50' angebracht, wobei die Ausgangskörper 50, 50' mittels Querelementen 52, die die Axialöffnungen 32 der Räder 30 mit einem Spiel so durchqueren, dass die Ausgangskörper 50, 50' ein gegenseitig bewegungsloses Paar bilden, verbunden sind (Fig. 1, 2).

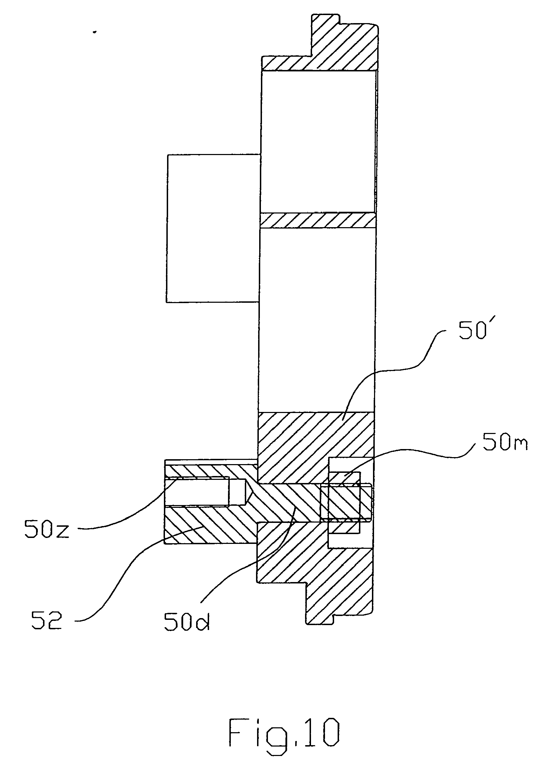

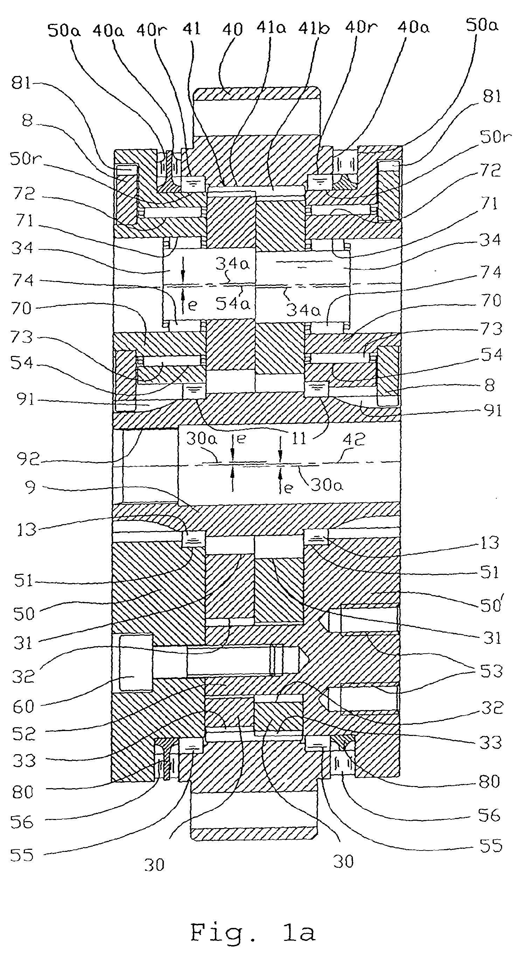

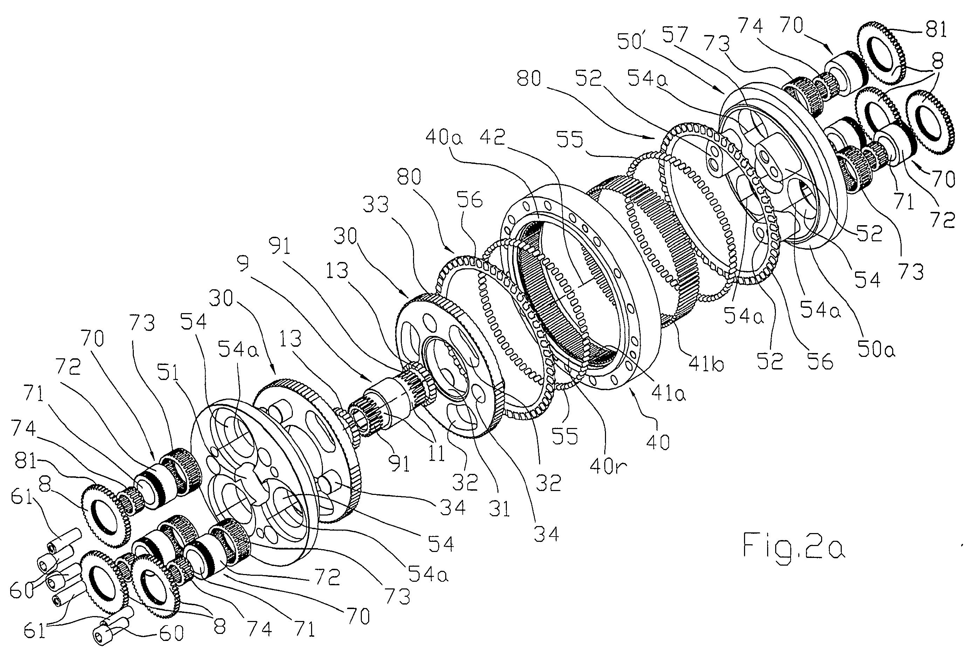

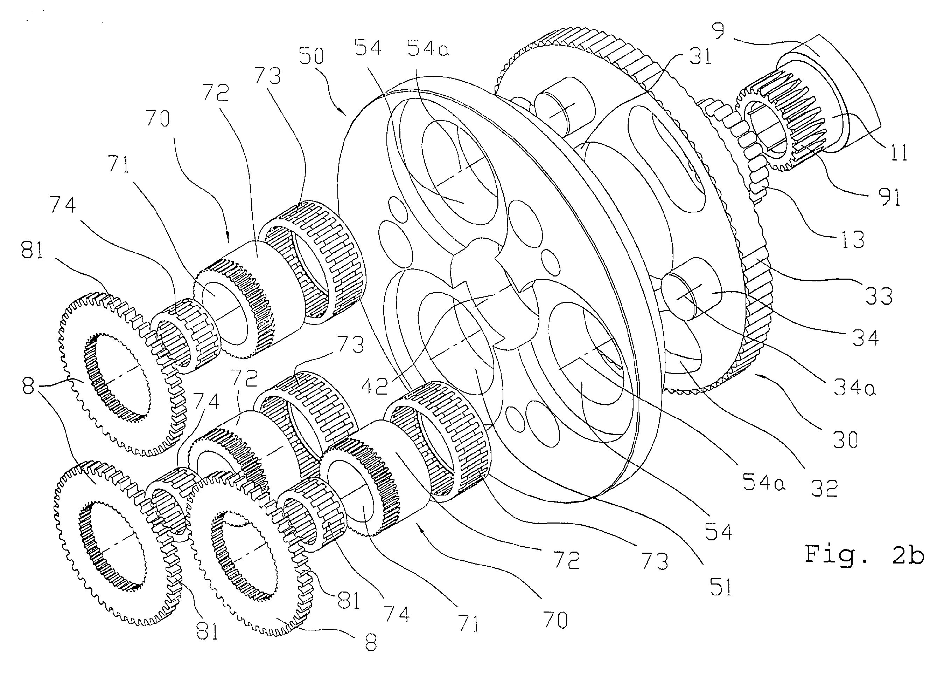

Die Querelemente 52 stellen einen integralen Bestandteil des Ausgangsglieds 50' dar (Fig. 1, 2). An deren Stirnseite ist eine Gewindebohrung 58 für die Schraube 60 sowie eine Bohrung 59 für den Stift 61 ausgeführt, die die Ausgangskörper 50, 50' fest verbinden (Fig. 1, 2 und 3). Das Querelement 52 kann als selbständige, mindestens mit einem Ausgangskörper 50, 50' fest verbundene Komponente gebildet sein (Fig. 10). An der Stirnseite des Querelements 52 befindet sich eine Gewindebohrung 50z für die Schraube 60 und eine Bohrung für den Stift 61, mit deren Hilfe die Ausgangskörper miteinander fest verbunden sind (Fig. 2). Das Querelement besitzt in diesem Fall einen zylinderförmigen Teil 50d mit an seinem einen Ende angeordneten Gewinde, der mit einer Sicherheitsmutter 50m versehen ist (Fig. 10).

Das fest verbundene Ausgangskörperpaar 50, 50' ist im Rad 40 drehbar gelagert.
Jeder der Ausgangskörper 50, 50' ist mit einer zentralen Öffnung 51 mit einer äußeren zylindrischen Radialfläche 50r versehen. In den zentralen Öffnungen 51 der Ausgangskörper 50, 50' ist mit Hilfe von Wälzelementen 13 und-Lagerbahnen 11 an den Enden der Welle 10 die Eingangswelle 10 drehbar gelagert. Die Wälzelemente 13 sind in einem Lagerkäfig gelagert (Fig. 1, 2).

Im Raum zwischen der zentralen Öffnung 51 und der Radialfläche 50r der Ausgangskörper 50, 50' befinden sich in gleichen Abständen voneinander am Außenumfang angebrachte außermittige Öffnungen 54 der Ausgangskörper 50, 50' (Fig. 1, 2).

Die Ausgangskörper 50, 50' sind an der Außenseite mit außermittigen Axialflächen 50a versehen, und zwar an der an das Rad 40 anliegenden Seite.

Das Rad 40 ist an den an die Ausgangskörper 50, 50' anliegenden Seiten mit zylindrischen radialen Innenflächen 40a und gleichzeitig an den Außen-Stirnseiten mit axialen Kreisringflächen 40a versehen, zu denen die Achse des Rads 40 mit Innenverzahnung 41 quer ausgerichtet ist. Der Querabstand der Axialflächen 40a am Rad 40 mit Innenverzahnung 41 bestimmt dessen Tiefe (Fig. 1, 2).

An beiden Seiten zwischen den Axialflächen 40a und 50a des Rads 40 und des Ausgangskörpers 50, 50' befinden sich Wälzelemente 56 zylindrischer Form, deren Achse quer zur Achse 42 des Rads 40 ausgerichtet ist. Die Wälzelemente 56 sind in den Aussparungen 81' des Lagerkäfigs 80 gelagert, der zwei Stirnflächen 80a und eine Innenfläche 80r aufweist, mit der er auf der zylindrischen Außenfläche des Ausgangskörpers lagert.

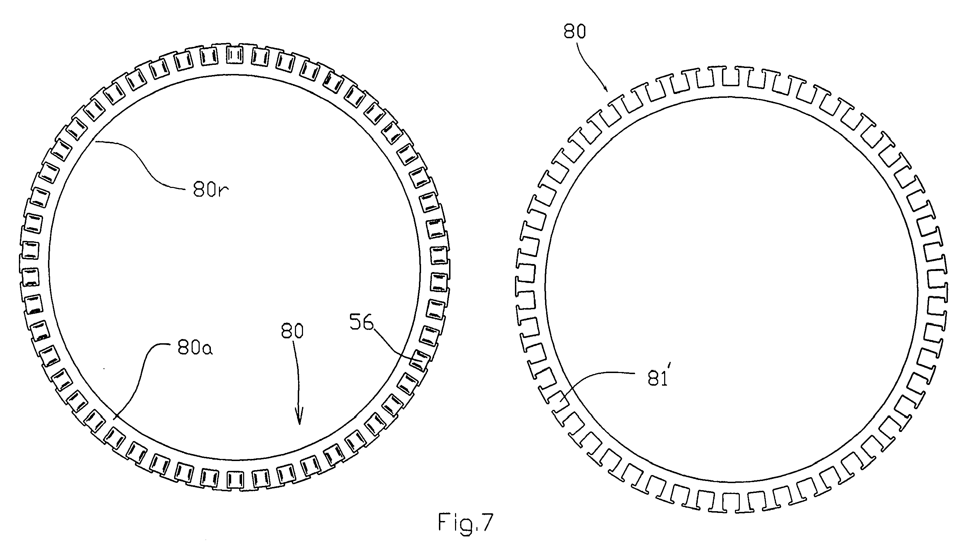

Zwischen den radialen Außenflächen 50r der Ausgangskörper 50, 50' mit radialen Innenflächen 40r des Rads 40 befinden sich zylinderförmige Wälzelemente 55, deren Achse in Richtung der Achse 42 des Rads mit Innenverzahnung orientiert ist (Fig. 1, 2). Die Wälzelemente 55 werden beim Wälzen über die Flächen 50r und 40r von einer der Stirnflächen 80a des Lagerkäfigs 80 und der am Rad 40 gebildeten Führungsfläche geführt (Fig. 1, 7).

Zwischen jedem der Räder 30 mit Außenverzahnung 33 und dem anliegenden Ausgangskörper 50, 50' ist eine Einrichtung angeordnet, die die Planetenbewegung des Rads 30 mit Außenverzahnung 33 in eine Rotationsbewegung des Ausgangskörpers 50, 50' umsetzt. Diese Einrichtung besteht aus drei zylinderförmigen Körpern 34, der Form nach zylindrischen Zapfen, die auf der Stirnfläche des an den Ausgangskörper 50, 50' anliegenden Rads 30 gleichmäßig über dessen Umfang verteilt angeordnet sind. Die zylinderförmigen Körper 34 sind in Richtung der Achse 42 des Rads 40 mit Innenverzahnung orientiert und mit dem Rad 30 mit Außenverzahnung fest verbunden. Die zylinderförmigen Körper 34 sind in den Organen 70 drehbar gelagert, die ihrerseits in den außermittigen Öffnungen 54 der Ausgangskörper 50, 50' drehbar gelagert sind (Fig. 1, 2). Das Organ 70 ist in Form eines Rings mit einer zylindrischen Innen- und einer zylindrischen Außenfläche 71, 72 ausgeführt, wobei die Achse 71 a der zylindrischen Innenfläche 71 entgegen der Achse 72a der zylindrischen Außenfläche 72 um einen Abstand e versetzt ist. Eine derartige Form wird auch als Excenterring bezeichnet. Der Abstand der Achse 34a des zylinderförmigen Körpers 34 von der Achse 54a der außermittigen Öffnung 54 des Ausgangskörpers 50, 50' beträgt ebenfalls e (Fig. 1, 6).

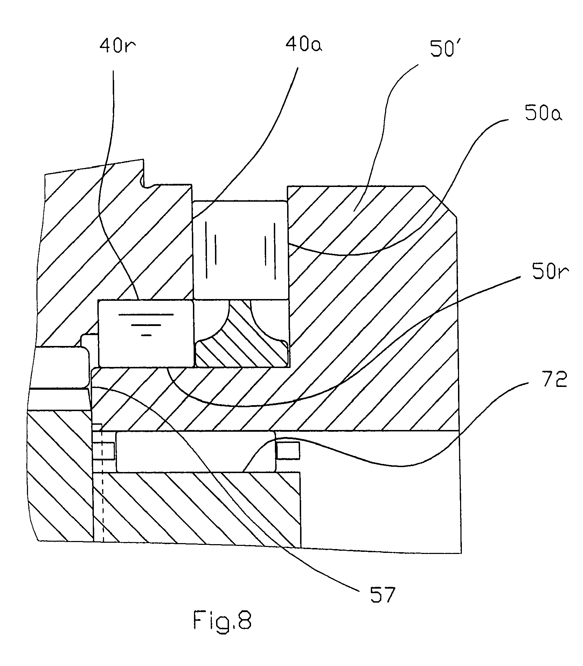

Die drehbare Lagerung des Organs 70 in der außermittigen Öffnung 54 des Ausgangskörpers 50, 50' ist als Wälzlagerung mit in einem Lagerkäfig gelagerten Wälzelementen 73 ausgeführt. Die Drehlagerung des zylindrischen Körpers 34 im Organ 70 ist ebenso als eine Wälzlagerung ausgeführt. Hierfür sind die in einem Lagerkäfig gelagerten Wälzelemente 74 vorgesehen (Fig. 1, 2). An den an die Räder 30 mit Außenverzahnung anliegenden Stirnseiten der Ausgangskörper 50, 50' sind Stützflächen 57 ausgebildet, zwischen denen die Räder bei deren Planetenbewegung axial geführt werden. Die Stützflächen 57 begrenzen gleichzeitig den Axialvorschub der Zylinderzapfen 41 b der Innenverzahnung 41, (Fig. 8).

Mindestens an einem der Ausgangskörper 50, 50' sind an der Außen-Stirnfläche Gewindebohrungen 53 zur Befestigung des Getriebes am anzutreibenden Objekt oder am Rahmen der Einrichtung, in der das Getriebe installiert ist, ausgeführt.

Das zweite bevorzugte Ausführungsbeispiel des erfindungsgemäßen Getriebes ist in den Figuren 1 a und 2a sowie auf Figur 2b gezeigt.

An beiden Seiten der Eingangswelle 9 sind Außenverzahnungen 91 und in der Innenöffnung eine Innennutung 92 für den Anschluß des Antriebsmotors angeordnet. Die Außenverzahnung 33 der Räder 30 greift in die Innenverzahnung 41 des Rads 40 ein. Die Zahnanzahl der Außenverzahnung 33 des Rads 30 ist geringer als die Zahnanzahl der Innenverzahnung 41 des Rads 40. Die Achse 30a der Räder 30 ist entgegen der Achse der 42 des Rads 40 um einen Abstand e versetzt. Die Innenverzahnung 41 besteht aus Nuten 41 a mit Halbkreisprofil, in denen die Zylinderzapfen 41 b gelagert sind.

Die Räder 30 mit Außenverzahnung 33 weisen gleichmäßig über ihren Umfang verteilte außermittige durchgehende Öffnungen 32 in axialer Richtung auf. Die Räder 30 sind zwischen den Ausgangskörpern 50, 50' angeordnet. Die Ausgangskörper 50, 50' sind mittels Querelementen 52, welche mit Spiel durch die außermittigen Öffnungen 32 der Räder 30 hindurchführen miteinander verbunden, so dass die Ausgangskörper 50, 50' ein gegenseitig unbewegliches Paar bilden.

Die Querelemente 52 stellen einen integralen Bestandteil des Ausgangskörpers 50' dar. An der Stirnseite der Querelemente ist jeweils eine Öffnung und eine Bohrung für jeweils eine Schraube 60 und einen Stift 61 vorgesehen, die die Ausgangskörper 50, 50' fest miteinander verbinden.

Die zwei fest miteinander verbundenen Ausgangskörper 50, 50' sind in dem Rad 40 drehbar gelagert.

Jeder der Ausgangskörper 50, 50' weist eine zentrale Öffnung 51 und eine zylindrische radiale Außenfläche 50r auf. In den Zentralöffnungen 51 der Ausgangskörper 50, 50' ist mittels Wälzelementen 13 und Lagerbahnen 11 an den Enden der Welle 10 die Eingangswelle 10 drehbar gelagert. Die Wälzelemente 13 sind in einem Lagerkäfig angeordnet.

Im Raum zwischen der zentralen Öffnung 51 und der Radialfläche 50r der Ausgangskörper 50, 50' befinden sich in gleichen Abständen zueinander angeordnete Öffnungen 54 der Ausgangskörper 50, 50'.

An der Außenseite der Ausgangskörper 50, 50' sind an der dem Rad 40 zugewandten Seite außermittige Axialflächen 50a ausgebildet.

Das Rad 40 weist an seinen den Ausgangskörpern 50,50' zugewandten Seiten zylindrische radiale Innenflächen 40r auf. Darüber hinaus sind an den Außen-Stirnseiten axiale Kreisringflächen 40a ausgebildet, welche normal zu der Achse 42 des Rads 40 mit Innenverzahnung 41 ausgerichtet sind. Der Querabstand der Axialflächen 40a in Richtung der Achse 42 bestimmt maßgeblich die Dicke des Rads 40 mit Innenverzahnung 41.

An beiden Seiten zwischen den Axialflächen 40a, 50a und dem Ausgangskörper 50, 50' befinden sich zylinderförmige Wälzelemente 56, deren Achse quer zur Achse 42 des Rads 40 ausgerichtet ist. Die Wälzelemente 56 sind in Aussparungen 81' des Lagerkäfigs 80 gelagert. Der Lagerkäfig 80 weist zwei Stirnflächen 80a und eine Innenfläche 80r auf, mit der er auf der zylindrischen Außenfläche des Ausgangskörpers drehbar gelagert ist.

Zwischen den radialen Außenflächen 50r der Ausgangskörper 50, 50' und den radialen Innenflächen 40r des Rads 40 befinden sich zylinderförmige Wälzelemente 55, deren Achsen parallel zur Richtung der Achse 42 des Rads 40 mit Innenverzahnung 41 verlaufen.

Die Wälzelemente 55 werden beim Wälzen auf den Flächen 50r und 40r von einer der Stirnflächen 80a des Lagerkäfigs 80 und der im Rad 40 gebildeten Führungsfläche geleitet.

Zwischen jedem der Räder 30 mit Außenverzahnung und dem anliegenden Ausgangskörper 50, 50' befindet sich eine Einrichtung, die die Planetenbewegung des Rads 30 mit Außenverzahnung in eine Rotationsbewegung des Ausgangskörpers 50, 50' umsetzt. Die Einrichtung besteht aus drei zylinderförmigen Körpern 34, der Form nach Zylinderzapfen, die am Außenumfang der an den Ausgangskörper 50, 50' anliegenden Stirnfläche des Rads 30 gleichmäßig verteilt sind. Die zylinderförmigen Körper 34 sind in Richtung der Achse 42 des Rads 40 mit Innenverzahnung orientiert und mit dem Rad 30 mit Außenverzahnung fest verbunden. Die zylinderförmigen Körper 34 sind in den Organen 70 drehbar gelagert, die ihrerseits in den außermittigen Öffnungen 54 der Ausgangskörper 50, 50' drehbar lagern.

Das Organ 70 hat die Form eines Rings mit einer zylindrischen Innen- und Außenfläche 71, 72, wobei die Achse 71 a der zylindrischen Innenfläche entgegen der Achse 72a der zylindrischen Außenfläche 72 um den Abstand e versetzt ist ― Excenterring. Der Abstand der Achse 34a des zylinderförmigen Körpers 34 von der Achse 54a der außermittigen Öffnung 54 des Ausgangskörpers 50, 50' entspricht ebenfalls der Excentrizität e.

Die drehbare Lagerung des Organs 70 in der außermittigen Öffnung 54 des Ausgangskörpers 50, 50' ist wiederum als Wälzlagerung mit in einem Lagerkäfig gelagerten Wälzelementen 73 ausgeführt. Die Drehlagerung des zylindrischen Körpers 34 im Organ 70 ist ebenso als eine Wälzlagerung ausgeführt. Hierfür sind die in einem Lagerkäfig gelagerten Wälzelemente 74 vorgesehen (Fig. 1 a, 2a, 2b). An den an die Räder 30 mit Außenverzahnung anliegenden Stirnseiten der Ausgangskörper 50, 50' sind Stützflächen 57 ausgebildet, zwischen denen die Räder bei deren Planetenbewegung axial geführt werden. Die Stützflächen 57 begrenzen gleichzeitig den Axialvorschub der Zylinderzapfen 41 b der Innenverzahnung 41, (Fig. 2a).

Mit dem Organ 70 ist das Rad 8 mit der zweiten Außenverzahnung 81 unverdrehbar verbunden, das mit der ersten Außenverzahnung 91 der Eingangswelle 9 so im Eingriff steht, dass die Achse des Rads mit der zweiten Außenverzahnung mit der Achse der Außenfläche 72 des Organs 70 identisch ist (Fig. 2b). Das Rad 8 mit der zweiten Außenverzahnung 81 ist mit dem Organ 70 mittels einer Nutverbindung verbunden.

Die Ausgangskörper 50, 50' sind an den an die Räder 30 mit Außenverzahnung anliegenden Stirnseiten mit ebenen Stützflächen 57 versehen, zwischen denen die Räder bei ihrer Planetenbewegung axial geführt werden. Die Stützflächen 57 sichern die Zylinderzapfen 41 b der Innenverzahnung 41 gegen Axialverschiebung (Fig. 2a).

Einer der Ausgangskörper 50, 50' ist an seiner Außen-Stirnfläche mit Gewindebohrungen 53 versehen, zur Befestigung des Getriebes am getriebenen Objekt oder am Rahmen der Einrichtung, in der das Getriebe installiert ist (Fig. 1 a).

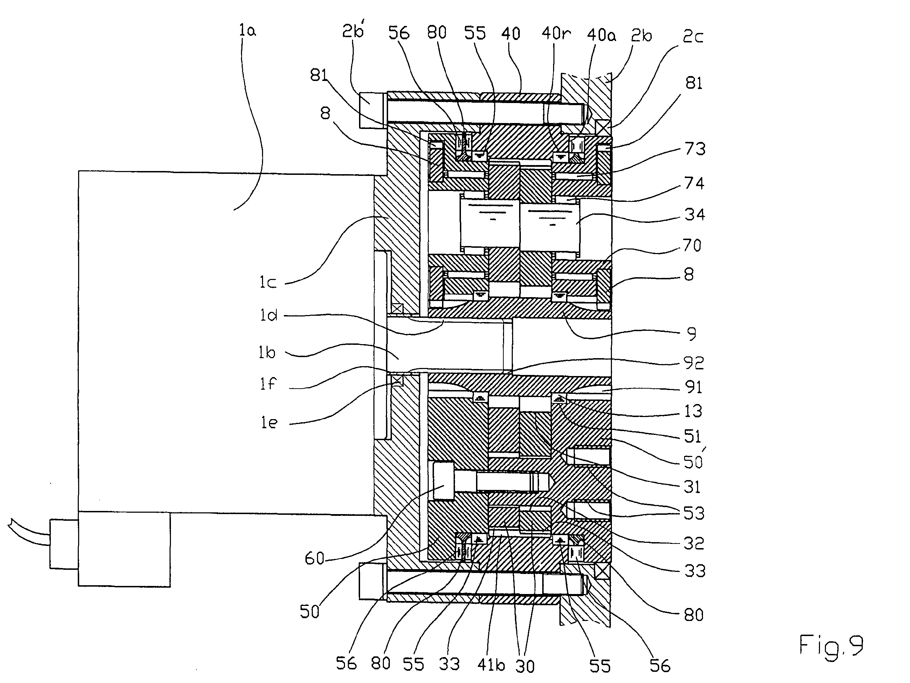

Die Verbindung des Antriebsmotors 1 a mit dem am Rahmen 2b befestigten Getriebe und dessen Abdichtung 2c ist in Fig. 9 gezeigt. Der Antriebsmotor 1 a ist am Ende der Welle 1b mit Außennutung 1 d versehen, die in die Innennutung 92 der Eingangswelle 9 des Getriebes eingefügt ist. Der Motor 1 a ist mit dem Getriebe mittels des Flanschs 1c verbunden, der mit Hilfe von Schrauben 2b' an das Getriebe geschraubt ist. Der Motor ist mittels einer Wellendichtung 1 e und eines Dichtrings 1f abgedichtet. Die Dichtung des Getriebes 2c ist im Rahmen 2b gebettet, der Außenumfang des Ausgangskörpers 50' bildet die Dichtfläche für die Dichtung.

Es wird hervorgehoben, dass der den Schmierraum der Einrichtung bildende außermittige Raum des Eingangskörpers genügend groß und von dem Schmierraum der übrigen Komponenten relativ gut getrennt ist. Dadurch wird eine Verunreinigung des drehbar gelagerten Excenterrings durch mikroskopische Abriebprodukte, die beim Kontakt der übrigen Funktionsflächen des Getriebemechanismus entstehen, verhindert.

Das Rad mit Außenverzahnung kann mit mindestens einer außermittig angeordneten axialen Durchgangsöffnung versehen sein.

Der oder die Ausgangskörper weisen vorzugsweise eine zentrale Öffnung und eine zylindrische radiale Außenfläche auf. In der zentralen Öffnung der Ausgangskörper kann dabei die Eingangswelle drehbar gelagert sein.

Vorzugsweise befindet sich im Bereich zwischen der zentralen Öffnung und der äußeren Wälzfläche des Ausgangskörpers mindestens eine zusätzliche außermittige Öffnung.

Vorzugsweise ist mindestens einer der Ausgangskörper an seiner Außenseite mit einer axial ausgerichteten Kreisringfläche versehen.

Es ist darüber hinaus denkbar, die Ausgangskörper an den an die Räder mit Außenverzahnung anliegenden Stirnseiten mit Stütz-Stirnflächen zu versehen, zwischen denen das oder die Räder bei deren Planetenbewegung axial geführt werden. Sofern die Innenverzahnung durch im Querschnitt kreisförmige, in halbkreisförmige Nuten eingelegte Zapfen gebildet ist, begrenzt die Führung gleichzeitig die Axialbewegung der Zapfen.

An mindestens einem der Ausgangskörper sind dabei vorzugsweise an der Außen-Stirnfläche Gewindebohrungen für die Befestigung des Getriebes am angetriebenen Objekt oder am Rahmen einer Einrichtung, in der das Getriebe installiert ist, angeordnet.

Sofern zwei Ausgangskörper vorgesehen sind, ist mindestens ein Rad mit Außenverzahnung zwischen den Ausgangskörpern angebracht. Dabei können die Ausgangskörper miteinander verbunden sein. Die miteinander fest verbundenen Ausgangskörper können dabei in dem Rad mit Innenverzahnung drehbar gelagert sein. Die Verbindung der Ausgangskörper kann mit Hilfe mindestens eines Querelements vorgenommen werden, das mit einem Spiel die Axialöffnung des Rads mit Außenverzahnung so durchquert, dass die Ausgangskörper ein gegenseitig unbewegliches Paar bilden. Das Querelement bildet entweder einen integralen Bestandteil mindestens eines Ausgangselements oder ist als eine selbständige Komponente gebildet, die mindestens mit einem Ausgangskörper fest verbunden ist. An der Stirnseite des Querelements kann eine Gewindebohrung für eine Schraube und eine Bohrung für einen Stift gebildet sein, mit deren Hilfe die Ausgangskörper miteinander fest verbunden sind.

### Bezugszahlenliste

- 10: Eingangswelle
- 10a: Achse der Eingangswelle
- 17, 17': Kurbelzapfen der Eingangswelle
- 17a, 17'a: Kurbelzapfenachse der Eingangswelle
- 11: Lagerbahnen der Eingangswelle
- e: Abstand der Eingangswellenachse von der Kurbelzapfenachse
- 14: Innennutung zur Verbindung der Eingangswelle mit dem Antriebsmotor
- 12: Wälzelemente der Drehlagerung des Rads mit Außenverzahnung auf dem Kurbelzapfen
- 12': Lagerkäfig der Wälz-Drehlagerung des Rads mit Außenverzahnung
- 13: Wälzelemente der Drehlagerung der Eingangswelle im Ausgangskörper
- 30: Rad mit Außenverzahnung
- 31: Zentrale Öffnungdes Rads mit Außenverzahnung
- 32: außermittige durchgehende Axialöffnung des Rads mit Außenverzahnung
- 33: Außenverzahnung
- 34: zylinderförmiger Körper
- 34a: Achse des zylinderförmigen Körpers
- 40: Rad mit Innenverzahnung
- 40a: Axialfläche des Rads mit Innenverzahnung
- 40r: radiale Innenfläche des Rads mit Innenverzahnung
- 41: Innenverzahnung
- 41 a: Nuten mit halbrundem Profil des Rads mit Innenverzahnung
- 41 b: Zylinderzapfen der Innenverzahnung
- 50, 50': Ausgangskörper
- 50a: Axialfläche des Ausgangskörpers
- 50r: radiale Außenfläche des Ausgangskörpers
- 51: Zentralöffnungen des Ausgangskörpers
- 52: Verbindungs-Querelement der Ausgangskörper
- 53: Gewindebohrungen für den Getriebeanschluss
- 54: außermittige Öffnung des Ausgangskörpers
- 54a: Achse der außermittigen Öffnung des Ausgangskörpers
- 55: Wälzelemente zwischen der radialen Außenfläche des Ausgangskörpers und der radialen Innenfläche des Rads mit Innenverzahnung
- 56: Wälzelemente zwischen der Axialfläche des Ausgangskörpers und der Axialfläche des Rads mit Innenverzahnung
- 57: Stützflächen an den Ausgangskörpern für die axiale Radführung
- 58, 50z: Gewindebohrung an der Stirnseite des Querelements
- 59: Bohrung für den Stift an der Stirnseite des Querelements
- 50d: zylindrischer Teil des Querelements mit Gewindeende
- 50m: Schraubenmutter zur Befestigung des Querelements im Ausgangskörper
- 60: Schraube zur Verbindung der Ausgangskörper
- 61: Stift zur Verbindung der Ausgangskörper
- 70: Organ der Einrichtung, welches die Planetenbewegung des Rads mit Außenverzahnung transformiert
- 71: Innenfläche des Organs der Einrichtung, welches die Planetenbewegung des Rads mit Außenverzahnung transformiert
- 71a: Achse der Innenfläche des Organs der Einrichtung, welches die Planetenbewegung des Rads mit Außenverzahnung transformiert
- 72: Außenfläche des Organs der Einrichtung, welches die Planetenbewegung des Rads mit Außenverzahnung transformiert
- 72a: Achse der Außenfläche des Organs der Einrichtung, welches die Planetenbewegung des Rads mit Außenverzahnung transformiert
- 73: Wälzelemente der drehbaren Wälzlagerung des Organs in der außermittigen Öffnung des Ausgangskörpers
- 74: Wälzelemente der drehbaren Wälzlagerung des zylinderförmigen Körpers im Organ
- 80: Lagerkäfig der drehbaren Wälzlagerung des Ausgangskörpers im Rad mit Innenverzahnung
- 80a: Stirnfläche des Lagerkäfigs der drehbaren Wälzlagerung des Ausgangskörpers im Rad mit Innenverzahnung
- 80r: Innenfläche des Lagerkäfigs
- 81': Aussparung des Lagerkäfigs der drehbaren Wälzlagerung des Ausgangskörpers im Rad mit Innenverzahnung
- 8: Rad mit einer zweiten Außenverzahnung
- 81: zweite Außenverzahnung
- 9: Eingangswelle mit der ersten Verzahnung
- 91: erste Verzahnung an der Eingangswelle
- 1 a: Antriebsmotor des Getriebes
- 2b: Rahmen, an dem das Getriebe befestigt ist
- 2c: Getriebedichtung
- 1b: Motorwelle
- 1d: Außennutung der Motorwelle
- 1c: Flansch zur Verbindung des Motors mit dem Getriebe
- 2b': Schrauben zur Befestigung des Flanschs an dem Getriebe
- 1e: Wellendichtung des Motors
- 1f: Dichtring

## Patentansprüche

1. Getriebe mit mindestens einem Rad (40) mit Innenverzahnung (41), mit mindestens einem in Bezug auf das Rad (40) drehbar gelagerten Ausgangskörper (50, 50') sowie einer Eingangswelle (10) mit mindestens einem exzentrischen Abschnitt (17, 17') mit einer Exzentrizität (e), auf dem ein mit der Innenverzahnung kämmendes Rad (30) mit Außenverzahnung (33) drehbar gelagert ist, wobei bei zwei Ausgangskörpern (50, 50') mindestens ein Rad (30) zwischen den Ausgangskörpern (50, 50') angeordnet ist, sowie einer zwischen dem Rad (30) und dem Ausgangskörper (50, 50') angeordneten Einrichtung, welche die Planetenbewegung des Rades (30) in eine Rotationsbewegung des Ausgangskörpers transformiert, **dadurch gekennzeichnet, dass** die Einrichtung mindestens einen zylindrischen, sich in Achsrichtung des Rades (30) erstreckenden Körper (34) aufweist, der in einem Organ (70) drehbar gelagert ist,
dass der Körper (34) mit dem Rad (30) bzw. dem Ausgangskörper (50, 50') betriebsgemäß verbunden ist,
dass das Organ (70) in einer Öffnung (54) des Ausgangskörpers (50, 50') bzw. des Rades (30) drehbar gelagert ist und
dass die Achse (34a) des Körpers (34) von der Achse (54a) der Öffnung (54) um einen der Exzentrizität (e) entsprechenden Abstand beabstandet ist.

2. Getriebe nach Anspruch 1,
**dadurch gekennzeichnet,**
**dass** die Teile der Einrichtung formschlüssig miteinander verbindbar sind.

3. Getriebe nach Anspruch 1 oder 2,
**dadurch gekennzeichnet,**
**dass** der zapfenförmige und mit Abstand zur Längs-Achse (42) der Eingangswelle (10) angeordnete Körper (34) in die Öffnung (54) hineinragt.

4. Getriebe nach einem der Ansprüche 1 bis 3,
**dadurch gekennzeichnet,**
**dass** das Organ (70) hohlzylinderförmig ausgebildet ist.

5. Getriebe nach Anspruch 4,
**dadurch gekennzeichnet,**
**dass** das Organ (70) die Form einer Hülse aufweist, die den Raum zwischen dem Körper (34) und der Öffnung (54) spielfrei ausfüllt.

6. Getriebe nach einem der Ansprüche 1 bis 5,
**dadurch gekennzeichnet,**
**dass** die Außen- und Innenumhüllung des Organs (70) zylindrisch ist,
**dass** die Achse (54a) der Öffnung (54) mit der Achse (72a) der Außenfläche (72) des Organs (70) zusammenfällt und
**dass** der Abstand der Achse (72a) der Außenfläche (72) des Organs (70) von der Achse (71 a) der zylindrischen Innenumhüllung (71) der Exzentrizität (e) entspricht.

7. Getriebe nach einem der Ansprüche 1 bis 6,
**dadurch gekennzeichnet,**
**dass** mehrere, vorzugsweise zwei, drei, vier, fünf oder sechs Körper (34) vorgesehen sind, die um die Längs-Achse (42) der Eingangswelle (10) verteilt sind und mit einer entsprechenden Anzahl von Organen (70) in betrieblicher Verbindung stehen.

8. Getriebe nach einem der Ansprüche 1 bis 7,
**dadurch gekennzeichnet,**
**dass** die axiale Länge der Körper (34) sowie die axiale Länge der Organe (70) so gewählt ist, dass sie in etwa der Dicke des Ausgangskörpers (50) entsprechen.

9. Getriebe nach einem der Ansprüche 1 bis 8,
**dadurch gekennzeichnet,**
**dass** die Verbindung zwischen den Körpern (34) und den zugeordneten Organen (70) durch Steckverbindungen in axialer Richtung herstellbar ist.

10. Getriebe nach einem der vorhergehenden Ansprüche
**dadurch gekennzeichnet,**
**dass** mindestens zwischen den planparallelen Stirnseiten des Ausgangskörpers (50) und des Rades (30) mindestens ein Axialwälzlager angeordnet ist.

11. Getriebe nach einem der vorhergehenden Ansprüche
**dadurch gekennzeichnet,**
**dass** das Organ (70) die Form einer excenterringförmigen Hülse aufweist und in dem Raum zwischen dem Körper (34) und der Öffnung (54) angeordnet ist, wobei zwischen dem Körper (34) und dem Organ (70) und/oder zwischen dem Organ (70) und der Öffnung (54) jeweils ein Wälzlager angeordnet ist.

12. Getriebe nach einem der vorhergehenden Ansprüche
**dadurch gekennzeichnet,**
**dass** der exzentrische Abschnitt (17, 17') der Eingangswelle (10) mindestens aus einem um die Exzentrizität (e) gegenüber der Längsachse (42) der Eingangswelle (10) parallel versetzten zylinderförmigen Kurbelzapfen besteht, dessen Durchmesser mindestens dem Durchmesser der Antriebswelle zuzüglich dem doppelten Wert der Exzentrizität (e) entspricht.

13. Getriebe nach einem der vorhergehenden Ansprüche
**dadurch gekennzeichnet,**
**dass** die Eingangswelle (9) mindestens einen Abschnitt (92) mit einer Außenverzahnung (91) aufweist, welche ein mit dem Organ (70) verbundenes Zahnrad (8) kämmt, wobei die Achse des Zahnrads (8) der Achse (54a) der Öffnung (54), in welcher das Organ (70) angeordnet ist, entspricht.

14. Getriebe nach einem der vorhergehenden Ansprüche
**dadurch gekennzeichnet,**
**dass** der Ausgangskörper (50) stirnseitig an dem Rad (40) mit Innenverzahnung (41) drehbar gelagert ist.

15. Getriebe nach Anspruch 14,
**dadurch gekennzeichnet,**
**dass** mindestens an den einander zugewandten Axialflächen des Ausgangskörpers (50) und des Rads (40) mit Innenverzahnung (41) Lagerlaufbahnen vorgesehen sind.
